# EUROPÄISCHE PATENTSCHRIFT

(11) **EP 2 785 555 B1**
(45) Veröffentlichungstag und Bekanntmachung des Hinweises auf die Patenterteilung: **01.07.2015**
(21) Anmeldenummer: 12780450.8
(22) Anmeldetag: 12.10.2012
(51) Int. Cl.: B60K 26/02

(54) **PEDALWERTGEBERANORDNUNG**
PEDAL VALUATOR ARRANGEMENT
ENSEMBLE CAPTEUR DE PÉDALE

(30) Priorität: 01.12.2011 DE 102011087580
(43) Veröffentlichungstag der Anmeldung: 08.10.2014
(73) Patentinhaber: Robert Bosch GmbH, 70442 Stuttgart (DE)
(72) Erfinder: HLAVKA, Milos, 373 12 Borovany (CZ)
(86) Internationale Anmeldenummer: PCT/EP2012/070315
(87) Internationale Veröffentlichungsnummer: WO 2013/079249

(56) Entgegenhaltungen:
- EP-A2- 1 126 353
- DE-A1- 10 258 286
- DE-A1- 19 536 699
- US-A1- 2004 237 700

## Beschreibung

Die vorliegende Erfindung betrifft eine Pedalwertgeberanordnung gemäß dem Oberbegriff des Anspruches 1.

### Stand der Technik

In Kraftfahrzeugen werden in zunehmendem Maße E-Gassysteme eingesetzt zur Steuerung der Leistung des Antriebsmotors, z. B. eines Verbrennungs- und/oder Elektromotors. Dabei wird von einem Fuß des Kraftfahrzeuges ein Pedal als Fahr- oder Gaspedal um eine Drehachse verschwenkt und der Drehwinkel des Pedales wird von einem Sensor erfasst. In Abhängigkeit von der von dem Sensor erfassten Stellung des Pedales wird die Leistung des Antriebsmotors gesteuert und/oder geregelt. Bei einem aktiven Fahrpedal wird von einer Motoreinheit auf das Fahrpedal eine zusätzliche Rückstellkraft aufgebracht, so dass von einem Fahrassistenzsystem des Kraftfahrzeuges haptisch an den Fuß des Fahrers eine Handlungsaufforderung übertragen werden kann.

In Pedalwertgeberanordnungen mit einem Sensor zur Erfassung der Stellung des Fahrpedales, so dass die Pedalwertgeberanordnung in einem E-Gassystem eingesetzt werden kann, umfasst diese ein Einrichtung zur Erzeugung einer Reibhysterese an dem Fahrpedal. Zur Komfortsteigerung beim Bewegen des Fahrpedales erzeugt die Einrichtung eine Kraft- bzw. Reibhysterese am Pedalweg zwischen der Ausgangsstellung und der Endstellung. Dadurch entspricht die erforderliche Kraft zum Betätigen des Fahrpedales derjenigen bei konventionellen Kraftfahrzeugen ohne E-Gassystem mit mechanischem Übertragungsmitteln, z. B. einem Bowdenzug, zur Übertragung der Kraft von dem Fahrpedal auf ein Drosselorgan, z. B. eine Drosselklappe, eines Verbrennungsmotors des Kraftfahrzeuges. Somit verfügt die Pedalwertgeberanordnung weiterhin über das von mechanischen Übertragungsmitteln gewohnte Gefühl bzw. die erforderliche Kraft zum Betätigen bzw. Bewegen des Fahrpedales.

Die DE 102 58 286 A1 zeigt ein Fahrpedalmodul zum Steuern der Leistung einer Antriebsmaschine, insbesondere einer Brennkraftmaschine eines Fahrzeugs, mit einem mittels einer Schwenkverbindung an einem Lagerbock um eine Schwenkachse drehbar gelagerten Pedalhebel, der mit wenigstens einem Pedalhebelanschlag gegen einen zugeordneten Lagerbock anschlagbar ist, wobei im Bereich des Pedalhebelanschlags und/oder des Lagerbocks derartige Elastizitäten vorhanden sind, dass während einer um die Schwenkachse ausgeführten Relativbewegung zwischen dem Pedalhebel und dem Lagerbock zur Herstellung der Schwenkverbindung der Pedalhebelanschlag am Lagerbockanschlag bedingt durch elastische Verformungen vorbeigeleitet und ihn nach Rückfederung hintergreift. Lagerflächen an dem Lagerbock für den Pedalhebel sind dabei zylinderförmig ausgebildet.

Die DE 195 36 699 A1 zeigt ein Fahrpedalmodul zum Steuern der Leistung einer Antriebsmaschine, mit einem über eine Lagerstelle an einer Haltestruktur gelagerten, um eine Schwenkachse über einen Schwenkwinkel schwenkbaren Pedalhebel, wobei ein die Stellung des Pedalhebels erfassender und ein entsprechendes Signal an eine Steuerung liefernder Sensor und eine Rückstellfederung zum Rückstellen des Pedalhebels in eine Ruhestellung vorgesehen sind, wobei an der Lagerstelle mindestens eine Lagerschale mit einem Lagerradius und mindestens ein in der Lagerschale gelagerter, dem Lagerradius angepasster Lagerzapfen vorgesehen sind, wobei der Lagerradius so groß bemessen ist, dass eine deutlich merkbare, eine Schwenkbewegung des Pedalhebels behindernde Reibhysterese entsteht.

### Offenbarung der Erfindung

### Vorteile der Erfindung

Erfindungsgemäße Pedalwertgeberanordnung für ein Kraftfahrzeug, umfassend ein zwischen einer Ausgangsstellung und einer Endstellung verschwenkbares Fahrpedal, ein Lager für das Fahrpedal, wenigstens ein elastisches Element, insbesondere Feder, welche auf das Fahrpedal eine Rückstellkraft in Richtung der Ausgangsstellung aufbringt, um das Fahrpedal in die Ausgangsstellung zu bewegen, eine Einrichtung zur Erzeugung einer Reibhysterese an dem Fahrpedal, die Einrichtung umfassend ein erstes Reibelement mit einer, vorzugsweise im Querschnitt kreissegmentförmigen, ersten Reibfläche und ein zweites, bewegliches mit dem Fahrpedal in mechanischer Wirkverbindung stehendes Reibelement mit einer im Querschnitt kreissegmentförmigen zweiten Reibfläche und die erste und zweite Reibfläche aufeinander liegen, so dass aufgrund einer Relativbewegung zwischen der ersten und zweiten Reibfläche eine Reibkraft erzeugbar ist, wobei die erste Reibfläche einen zunehmenden Abstand zu einer Schwenkachse des zweiten Reibelementes, insbesondere bezüglich einer Drehrichtung des zweiten Reibelementes in Richtung zu der Endstellung, aufweist, so dass die erzeugbare Reibkraft pro Flächeneinheit der ersten Reibfläche umso größer ist, je größer der Abstand der ersten Reibfläche zu der Schwenkachse des zweiten Reibelementes ist.

Die erste Reibfläche ist somit vorzugsweise teilweise zylinderförmig, insbesondere als Lagerschale, ausgebildet und die zweite Reibfläche ist ebenfalls teilweise zylinderförmig, insbesondere als Lagerschale, ausgebildet. Diese beiden Reibflächen liegen aufeinander und erzeugen dadurch bei einer Relativbewegung zwischen den beiden Reibflächen eine Reibkraft. Die erste Reibfläche weist einen zunehmenden Abstand zu der Schwenkachse des zweiten Reibelementes auf, sodass bei einer Bewegung bzw. Schwenkbewegung des zweiten Reibelementes bei einer Bewegung des Fahrpedales von der Ausgangsstellung in die Endstellung die Druckkraft zwischen den beiden Reibflächen zunimmt aufgrund einer elastischen Verformung des ersten und/oder zweiten Reibelementes und dadurch die erzeugbare Reibkraft pro Flächeneinheit der ersten Reibfläche umso größer ist, je größer der Abstand der ersten Reibfläche zu der Schwenkachse des zweiten Reibelementes ist, das heißt, je größer die Druckkraft an der ersten Reibfläche ist, die von der zweiten Reibfläche auf die erste Reibfläche aufgebracht ist. Die gesamte von der Einrichtung erzeugbare Reibkraft ist damit nicht direkt proportional zu der Kontaktfläche zwischen der ersten und zweiten Reibfläche, sondern aufgrund des zunehmenden Abstandes und der dadurch bedingten zunehmenden Druckkraft zwischen der ersten und zweiten Reibfläche nimmt damit die insgesamt erzeugbare Reibkraft überproportional zu der Kontaktfläche zwischen der ersten und der zweiten Reibfläche zu, das heißt, dass bei einer Drehbewegung des Fahrpedals von der Ausgangsstellung zu der Endstellung ist ein überproportionaler Anstieg der erzeugbaren Reibkraft in Abhängigkeit von dem Drehwinkel des Fahrpedals ausführbar ist.

In einer zusätzlichen Ausführungsform weist die erste Reibfläche einen ersten Abschnitt auf und der erste Abschnitt ist im Querschnitt kreissegmentförmig ausgebildet und weist einen konstanten Abstand zu der Schwenkachse des zweiten Reibelementes auf und weist einen zweiten Abschnitt auf und der zweite Abschnitt weist einen zunehmenden Abstand zu der Schwenkachse des zweiten Reibelementes auf und/oder der erste Abschnitt der ersten Reibfläche und die zweite Reibfläche sind konzentrisch zueinander ausgerichtet und/oder ein maximaler Abstand der ersten Reibfläche zu der Schenkachse des zweiten Reibelementes ist um wenigstens 0,1%, 1%, 3%, 5% oder 10% größer als der minimale Abstand der ersten Reibfläche zu der Schwenkachse des zweiten Reibelementes und/oder das Fahrpedal ist um eine Schwenkachse verschenkbar und die Schwenkachse des Fahrpedales entspricht der Schwenkachse des zweiten Reibelementes. Die erste Reibfläche ist in einen ersten Abschnitt und in einen zweiten Abschnitt unterteilt. An dem ersten Abschnitt ist die erste Reibfläche im Querschnitt kreissegmentförmig bzw. teilweise zylinderförmig ausgebildet, sodass an der ersten Reibfläche erzeugbare Reibkraft direkt proportional zu der Kontaktfläche zwischen der zweiten Reibfläche und der ersten Reibfläche ist, weil am ersten Abschnitt der ersten Reibfläche die Druckkraft zwischen der zweiten und ersten Reibfläche im Wesentlichen konstant ist. An dem zweiten Abschnitt der ersten Reibfläche nimmt der Abstand zu der Rotationsachse des zweiten Reibelementes zu, sodass an dem zweiten Abschnitt eine unterschiedlich große Druckkraft zwischen der zweiten Reibfläche und der ersten Reibfläche vorhanden ist. Die Druckkraft an dem zweiten Abschnitt ist somit größer als die Druckkraft an dem ersten Abschnitt. Dadurch kann an dem zweiten Abschnitt pro Flächeneinheit der Kontaktfläche zwischen der ersten und zweiten Reibfläche eine größere Reibkraft pro Flächeneinheit erzeugt werden als an dem ersten Abschnitt und diese Reibkraft ist außerdem größer als an dem ersten Abschnitt.

Zweckmäßig sind der erste Abschnitt der ersten Reibfläche und die zweite Reibfläche koaxial zueinander ausgerichtet, insbesondere entspricht der Mittelpunkt des Kreises der kreissegmentförmigen ersten Reibfläche dem Mittelpunkt des Kreises der kreissegmentförmigen zweiten Reibfläche. Bei einer Ausbildung des zweiten Reibelementes an dem Fahrpedal entspricht die Schwenkachse des zweiten Reibelementes der Schwenkachse des Fahrpedals, sodass kein Mechanismus erforderlich ist zur Verbindung des Fahrpedals mit dem zweiten Reibelement. Die Pedalgeberanordnung kann dadurch konstruktiv besonders einfach ausgebildet sein.

In einer ergänzenden Ausführungsform steht in einem ersten Drehwinkelbereich des zweiten Reibelementes die zweite Reibfläche nur in Kontakt mit dem ersten Abschnitt der ersten Reibfläche, so dass bei einer Bewegung des Fahrpedales von der Ausgangsstellung in die Endstellung die Reibkraft proportional zu der Kontaktfläche zwischen der ersten und zweiten Reibfläche zunimmt oder die Reibkraft bei einer konstanten Kontaktfläche konstant ist. Die erste Reibfläche weist den ersten und den zweiten Abschnitt auf, sodass in einem ersten Drehwinkelbereich des zweiten Reibelementes bzw. des Fahrpedals kein Kontakt der zweiten Reibfläche zu dem zweiten Abschnitt besteht, sodass an der ersten Reibfläche die zweite Reibfläche ausschließlich an dem ersten Abschnitt der ersten Reibfläche aufliegt und dadurch zwischen der ersten und zweiten Reibfläche eine konstante Druckkraft vorhanden ist. Dadurch ist auch die erzeugbare Reibkraft proportional zu der Kontaktfläche zwischen der ersten und zweiten Reibfläche. Bei einer Bewegung des Fahrpedals von der Ausgangsstellung in die Endstellung in dem ersten Drehwinkelbereich nimmt somit die von der Einrichtung erzeugbare Reibkraft proportional zu der Kontaktfläche und damit auch proportional zu dem Drehwinkel des Fahrpedals zu oder ist konstant bei einer konstanten Kontaktfläche zwischen der ersten und zweiten Reibfläche. Unabhängig hiervon nimmt im Allgemeinen die erforderliche Kraft zum Bewegen des Fahrpedales von der Ausgangsstellung zu der Endstellung zu, weil eine zunehmende von dem elastischen Element auf das Fahrpedal aufgebrachte Kraft zu überwinden ist.

In einer zusätzlichen Ausführungsform steht in einem zweiten Drehwinkelbereich des zweiten Reibelementes die zweite Reibfläche in Kontakt zu dem zweiten Abschnitt und vorzugsweise zu dem ersten Abschnitt der ersten Reibfläche, so dass bei einer Bewegung des Fahrpedales von der Ausgangsstellung in die Endstellung die Reibkraft überproportional zu der Kontaktfläche zwischen der ersten und zweiten Reibfläche zunimmt und vorzugsweise der zweite Drehwinkelbereich die Endstellung des Fahrpedales umfasst und vorzugsweise der erste Drehwinkelbereich die Ausgangsstellung des Fahrpedales umfasst. Im zweiten Drehwinkelbereich besteht ein Kontakt zwischen der zweiten Reibfläche und dem zweiten Abschnitt der ersten Reibfläche, sodass dadurch an dem zweiten Abschnitt der ersten Reibfläche eine größere Druckkraft vorhanden ist als an dem ersten Abschnitt der ersten Reibfläche. Dadurch kann an dem zweiten Abschnitt der ersten Reibfläche eine größere Reibkraft pro Flächeneinheit erzeugt werden als an der ersten Reibfläche und aufgrund des zunehmenden Abstandes nimmt diese Reibkraft auch bei einer Bewegung des Fahrpedals bzw. des zweiten Reibelements in Richtung zu der Endstellung zu. Das heißt, dass in im Wesentlichen tangentialer Richtung an dem zweiten Abschnitt der ersten Reibfläche die Druckkraft zunimmt und dadurch auch die erzeugbare Reibkraft pro Flächeneinheit. Dadurch kann mittels der Pedalwertgeberanordnung in dem zweiten Drehwinkelbereich ein überproportionaler Anstieg der Reibkraft zur Verfügung gestellt werden, das heißt, dass die Reibkraft an dem zweiten Drehwinkelbereich stärker zunimmt als bei einer Bewegung des Fahrpedals in dem ersten Drehwinkelbereich von der Ausgangsstellung in die Endstellung.

In einer zusätzlichen Variante weist in der Ausgangsstellung des Fahrpedales das Fahrpedal den Drehwinkel Null auf und weist in der Endstellung des Fahrpedales das Fahrpedal den maximalen Drehwinkel auf und in dem ersten Drehwinkelbereich ist der Drehwinkel des Fahrpedales kleiner als in dem zweiten Drehwinkelbereich und/oder der Drehwinkel des Fahrpedales beträgt zwischen zwei Begrenzungswinkeln des zweiten Drehwinkelbereiches weniger als 90%, 70%, 50%, 30%, 20%, 10% oder 5% des maximalen Drehwinkels. Die zwei Begrenzungswinkel sind Endwinkel des zweiten Drehwinkelbereiches.

Der erste Drehwinkelbereich ist somit ein Winkelbereich des Fahrpedals von der Ausgangsstellung zu einem Winkel, d. h. einem ersten Begrenzungswinkel des zweiten Drehwinkelbereiches, zwischen dem ersten und zweiten Drehwinkelbereich und der zweite Drehwinkelbereich ist somit ein Winkelbereich zwischen einem Drehwinkel zwischen dem ersten und zweiten Drehwinkelbereich und der Endstellung des Fahrpedals als einem zweiten Begrenzungswinkel des zweiten Drehwinkelbereiches. Die überproportionale Zunahme der Reibkraft tritt damit bei einer Bewegung des Fahrpedals zwischen der Ausgangsstellung und der Endstellung erst kurz vor der Endstellung auf.

In einer weiteren Ausgestaltung weist die erste Reibfläche mit dem zunehmenden Abstand zu der Schwenkachse des zweiten Reibelementes, insbesondere an dem zweiten Abschnitt der ersten Reibfläche, einen stetig zunehmenden Abstand zu einer Schwenkachse des zweiten Reibelementes auf. Bei dem stetig zunehmenden Abstand nimmt somit die Druckkraft zwischen der ersten und zweiten Reibfläche an dem zweiten Abschnitt der ersten Reibfläche in Richtung zu der Endstellung stetig zu.

In einer ergänzenden Variante ist die erste Reibfläche mit dem zunehmenden Abstand zu der Schwenkachse des zweiten Reibelementes, insbesondere an dem zweiten Abschnitt der ersten Reibfläche, als eine ebene Rampe ausgebildet.

In einer zusätzlichen Ausgestaltung ist die erste Reibfläche mit dem zunehmenden Abstand zu der Schwenkachse des zweiten Reibelementes, insbesondere an dem zweiten Abschnitt der ersten Reibfläche, als eine konvexe oder konkave Fläche ausgebildet. Mittels einer unterschiedlichen Geometrie des zweiten Abschnitts der ersten Reibfläche können somit unterschiedliche überproportionale Zunahmen der Reibkraft in dem zweiten Drehwinkelbereich der Pedalwertgeberanordnung zur Verfügung gestellt werden.

Zweckmäßig bilden die erste und zweite Reibfläche das Lager des Fahrpedales. In vorteilhafter Weise benötigt somit die Pedalwertgeberanordnung kein gesondertes Lager für das Fahrpedal, sondern die erste und zweite Reibfläche bilden das Lager für das Fahrpedal, insbesondere dadurch, dass die erste und zweite Reibfläche aufgrund ihrer zylinderförmigen Ausbildung bzw. teilweise zylinderförmigen Ausbildung eine Lagergeometrie bzw. als Lagerschale ausbilden können.

In einer ergänzenden Ausgestaltung umfasst die Pedalwertgeberanordnung eine Haltestruktur, insbesondere einen Lagerbock, und das erste Reibelement ist, insbesondere einteilig, an der Haltestruktur ausgebildet.

In einer zusätzlichen Ausführungsform bestehen die Haltestruktur und/oder das erste Reibelement wenigstens teilweise, insbesondere vollständig, aus, vorzugsweise thermoplastischem, Kunststoff. Die Haltestruktur kann somit aus dem thermoplastischen Kunststoff besonders einfach und preiswert mittels thermoplastischen Kunststoffs durch Spritzgießen hergestellt werden. Dabei kann beim Spritzgießen der Haltestruktur auch das erste Reibelement, das heißt die erste Reibfläche mit dem ersten und zweiten Abschnitt, bereits beim Spritzgießen mit einer entsprechenden Geometrie ausgebildet werden, sodass im Wesentlichen keine zusätzlichen Kosten für die Ausbildung der ersten Reibfläche mit dem zweiten Abschnitt anfallen.

In einer zusätzlichen Variante ist das zweite Reibelement, insbesondere einteilig mit dem Fahrpedal oder als gesondertes Reibteil, an dem Fahrpedal ausgebildet. Das zweite Reibelement ist beispielsweise an dem Fahrpedal als ein gesondertes Reibteil, zum Beispiel aus Santoprene, befestigt, und dadurch kann eine besonders große Reibkraft pro Flächeneinheit zwischen der zweiten und der ersten Reibfläche erzeugt werden.

In einer zusätzlichen Ausführungsform bestehen das Fahrpedal und/oder das zweite Reibelement wenigstens teilweise, insbesondere vollständig, aus, vorzugsweise thermoplastischem, Kunststoff. Das Fahrpedal kann dadurch besonders preiswert mittels Spritzgießen aus thermoplastischem Kunststoff hergestellt werden.

In einer zusätzlichen Ausführungsform bestehen das erste Reibelement, insbesondere das erste Reibelement an dem zweiten Abschnitt, und/oder das zweite Reibelement wenigstens teilweise, insbesondere vollständig, aus einem thermoplastischen Elastomer oder Kunststoff, z. B. Santoprene.

Insbesondere umfasst die Pedalwertgeberanordnung einen Sensor zur Erfassung einer Stellung des Fahrpedales und/oder eine Motoreinheit, von welcher auf das Fahrpedal eine Rückstellkraft in Richtung der Ausgangsstellung aufbringbar ist. Der Sensor ist beispielsweise ein Hallsensor, welcher die Stellung, insbesondere einen Drehwinkel, des Fahrpedales erfasst, in ein elektrisches Signal umwandelt und an eine Steuerungseinheit übermittelt. Von der Steuerungseinheit wird ein Drosselorgan eines Antriebsmotors des Kraftfahrzeuges gesteuert und/oder geregelt in Abhängigkeit von der Stellung des Fahrpedales. Die Motoreinheit kann beispielsweise ein Elektromotor oder ein Elektromagnet sein.

### Kurze Beschreibung der Zeichnungen

Im Nachfolgenden wird ein Ausführungsbeispiel der Erfindung unter Bezugnahme auf die beigefügten Zeichnungen näher beschrieben. Es zeigt:
- Fig. 1: eine stark vereinfachte Ansicht einer Pedalwertgeberanordnung,
- Fig. 2: eine perspektivische Ansicht einer Haltestruktur der Pedalwertgeberanordnung,
- Fig. 3: eine perspektivische Ansicht der Haltestruktur und des Fahrpedales der Pedalwertgeberanordnung gemäß Fig. 2,
- Fig. 4: eine Seitenansicht der Pedalwertgeberanordnung gemäß Fig. 2 mit dem Fahrpedal in einem Drehwinkel zwischen einem ersten und zweiten Drehwinkelbereich,
- Fig. 5: eine Seitenansicht der Pedalwertgeberanordnung gemäß Fig. 2 mit dem Fahrpedal in einem Drehwinkel in einer Endstellung,
- Fig. 6: ein Diagramm der erzeugbaren Reibkraft in Abhängigkeit von demDrehwinkel des Fahrpedales für die Pedalwertgeberanordnung gemäß Fig. 2,

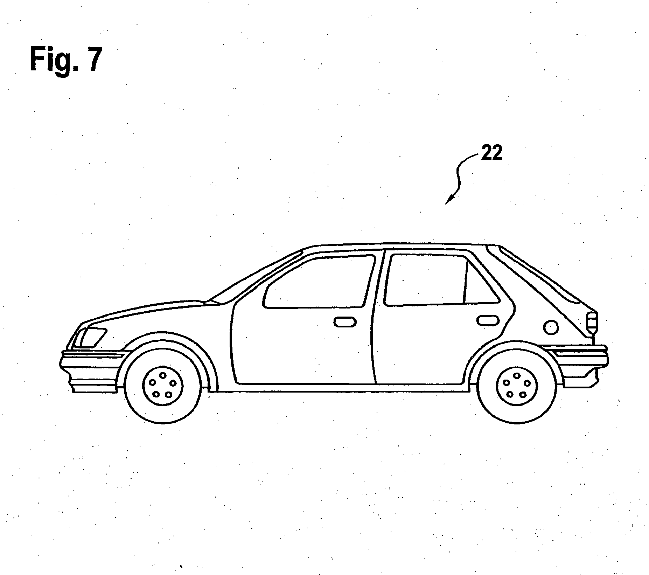

- Fig. 7: eine Ansicht eines Kraftfahrzeuges.

### Ausführungsformen der Erfindung

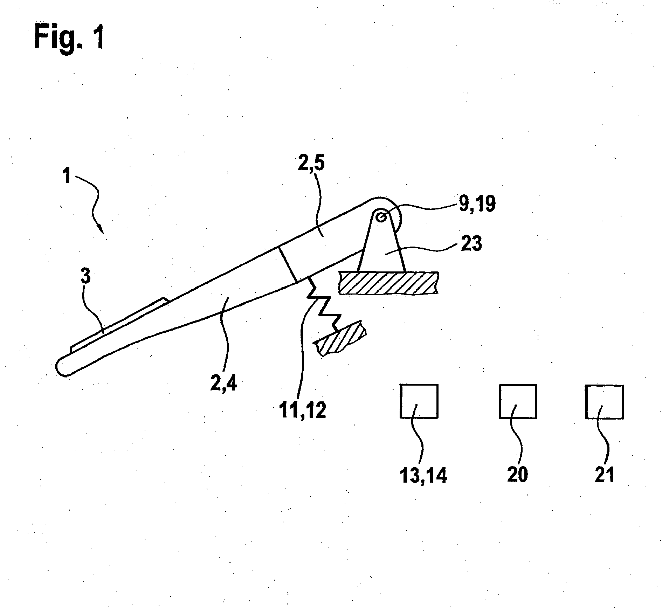

Eine Pedalwertgeberanordnung 1 wird in einem Kraftfahrzeug 22 mit einem nicht dargestellten Verbrennungs- und/oder Elektromotor als Antriebsmotor eingesetzt, um mit Hilfe eines E-Gassystems die Leistung des Antriebsmotors zu steuern und/oder zu regeln. Hierzu wird von einem Sensor 20 eine Stellung eines Fahrpedales 2 bzw. Gaspedals 2 (Fig. 1) erfasst und in Abhängigkeit von der Stellung des Fahrpedales 2 die Leistung des Antriebsmotors des Kraftfahrzeuges 22 gesteuert und/oder geregelt. An dem Fahrpedal 2 ist eine Fußauflage 3 zur Auflage eines Fußes des Fahrers ausgebildet. Bei einem Verbrennungsmotor als Antriebsmotor wird beispielsweise ein Drosselorgan z.B. eine Drosselklappe, von einem Stellmotor bewegt und bei einem Elektromotor wird die dem Elektromotor zugeführte elektrische Leistung entsprechend gesteuert und/oder geregelt (nicht dargestellt). In einer Ausgangsstellung des Fahrpedales 2 wird von dem Antriebsmotor die minimale Leistung, z.B. als Standgas, und in einer Endstellung des Fahrpedales 2 wird von dem Antriebsmotor die maximale Leistung aktiviert. Das Kraftfahrzeug 22 verfügt somit über ein E-Gas bzw. ein E-Gassystem.

Von zwei Federn 12 als elastische Elemente 11 wird auf das Fahrpedal 2 eine Rückstellkraft in Richtung der Ausgangsstellung aufgebracht. Darüber hinaus ist eine als Elektromotor 14 ausgebildete Motoreinheit 13 mechanisch mittels eines Getriebes (nicht dargestellt) mit dem Fahrpedal 2 mechanisch verbunden bzw. gekoppelt. Dabei kann mit der Motoreinheit 13 sowohl eine Rückstellkraft in Richtung der Ausgangsstellung als auch eine Vorstellkraft in Richtung der Endstellung des Fahrpedales 2 auf das Fahrpedal 2 aufgebracht werden. Die Pedalwertgeberanordnung 1 stellt dabei ein aktives Fahrpedal 2 zur Verfügung. Von einem nicht dargestellten Fahrassistenzsystem des Kraftfahrzeuges 22 werden verschiedene Parameter erfasst, z.B. der Abstand zu einem vorausfahrenden Kraftfahrzeug oder die zulässige Höchstgeschwindigkeit. Wird der Abstand zu dem vorausfahrenden Kraftfahrzeug 22 unterschritten, erfolgt eine haptische Rückmeldung an einem Fuß auf dem Fahrpedal 2. Hierbei wird von dem Elektromotor 14 eine Rückstellkraft auf das Fahrpedal 2 aufgebracht, welches der Fahrer mit Hilfe des Fußes haptisch wahrnehmen kann, so dass dadurch von einer Steuerungseinheit 21 eine Handlungsanregung bzw. Handlungsaufforderung an den Fahrer des Kraftfahrzeuges 22 übermittelt werden kann, nämlich im vorliegenden Fall die Stellung des Fahrpedales 2 in Richtung zu der Ausgangsstellung zu bewegen, um dadurch den Abstand zum vorausfahrenden Fahrzeug zu verringern. Das Fahrpedal 2 ist mit einem Lager 9 um eine Schwenkachse 19 verschwenkbar gelagert. Die Schwenkachse 19 ist senkrecht zu der Zeichenebene von Fig. 1.

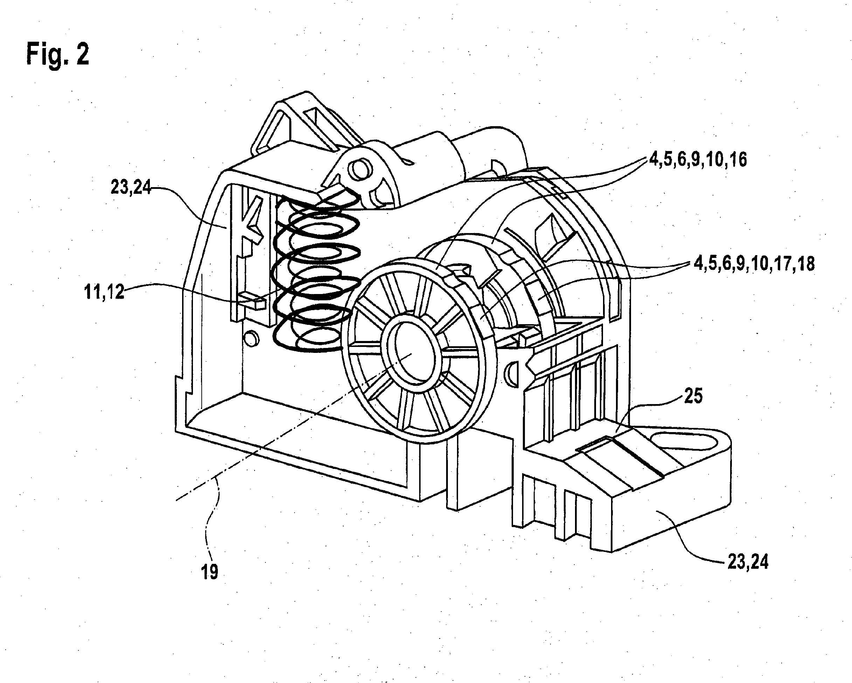

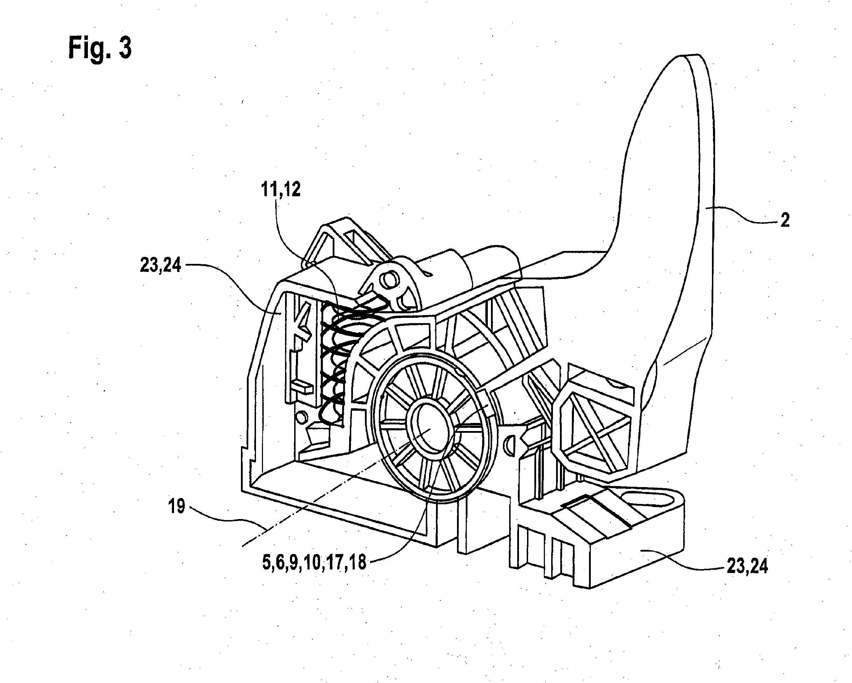

Die Pedalwertgeberanordnung 1 umfasst eine Haltestruktur 24, die den Lagerbock 23 bildet (Fig. 2 bis 5). Eine Einrichtung 4 dient zur Erzeugung einer Reibhysterese an dem Fahrpedal 2, das heißt bei einer Bewegung des Fahrpedals 2 von der Ausgangsstellung in die Endstellung und umgekehrt. Die Einrichtung 4 umfasst ein erstes Reibelement 5 mit einer ersten Reibfläche 6 und ein zweites Reibelement 7 mit einer zweiten Reibfläche 8. An der Haltestruktur 24 bzw. dem Lagerbock 23 ist einteilig mit der Haltestruktur 24 das erste Reibelement 5 ausgebildet. Das erste Reibelement 5 bzw. die erste Reibfläche 6 weist dabei einen ersten Abschnitt 16 und einen zweiten Abschnitt 17 auf. Der erste Abschnitt 16 ist im Querschnitt, das heißt bei einem Schnitt senkrecht zu der Schwenkachse 19 des Fahrpedals 2, kreissegmentförmig ausgebildet bzw. teilweise zylinderförmig. Der zweite Abschnitt 17 der zweiten Reibfläche 8 (Fig. 2 bis 5) ist als eine ebene Rampe 18 ausgebildet. An dem ersten Abschnitt 16 weist die erste Reibfläche 6 einen konstanten Abstand zu der Schwenkachse 19 auf. An der Rampe 18, die den zweiten Abschnitt 17 der ersten Reibfläche 6 bildet, ist der Abstand zu der Schwenkachse 19 größer als an dem ersten Abschnitt und nimmt aufgrund der Ausbildung des zweiten Abschnitts 17 als ebene Rampe 18 stetig in einer im Wesentlichen tangentialen Richtung in Richtung von einer Ausgangsstellung zu einer Endstellung stetig zu.

Das zweite Reibelement 7 mit der zweiten Reibfläche 8 ist an dem Fahrpedal 2 ausgebildet. Hierzu ist an dem Fahrpedal 2 ein gesondertes Reibteil 15 aus thermoplastischem Kunststoff formschlüssig befestigt. Das Reibteil 15 ist dabei aus Santoprene hergestellt und weist die zweite Reibfläche 8 auf. Die zweite Reibfläche ist ebenfalls im Querschnitt kreissegmentförmig bzw. teilweise zylinderförmig ausgebildet und das Fahrpedal 2 ist um die Schwenkachse 19 verschwenkbar. Dabei entspricht der Mittelpunkt des Kreissegmentes der zweiten Reibfläche 8 der Schwenkachse 19 bzw. liegt in der Schwenkachse 19. Die erste und zweite Reibfläche 6, 8 sind dadurch konzentrisch zueinander bzw. koaxial mit der gleichen Schwenkachse 19 ausgerichtet bzw. ausgebildet.

Die erste und zweite Reibfläche 6, 8 bilden eine Lagergeometrie 10 für das Fahrpedal 2, das heißt, das erste und zweite Reibelement 5, 7 bilden ein Lager 9 für das Fahrpedal 2. Dabei ist das Fahrpedal 2 mittels einer Rastverbindung und/oder eines Bolzens an der Haltestruktur 24 befestigt (nicht dargestellt).

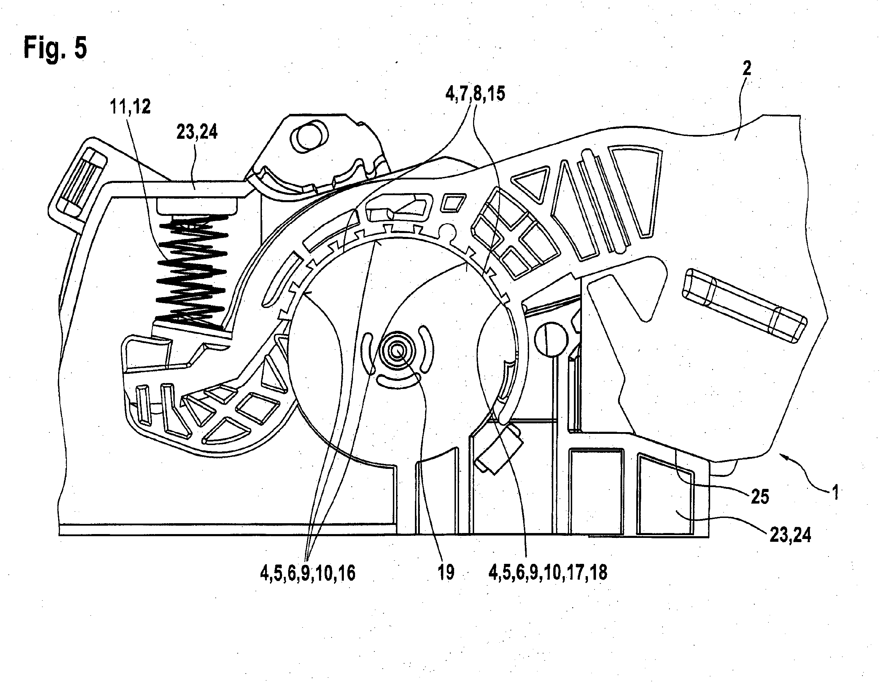

In der Ausgangsstellung des Fahrpedals 2 weist das Fahrpedal 2 und das zweite Reibelement 7 einen Drehwinkel Null auf und in der Endstellung den maximalen Drehwinkel. In Fig. 5 ist die Endstellung des Fahrpedals 2 dargestellt, das heißt, dass das Fahrpedal 2 an einem Anschlag 25 der Haltestruktur 24 aufliegt.

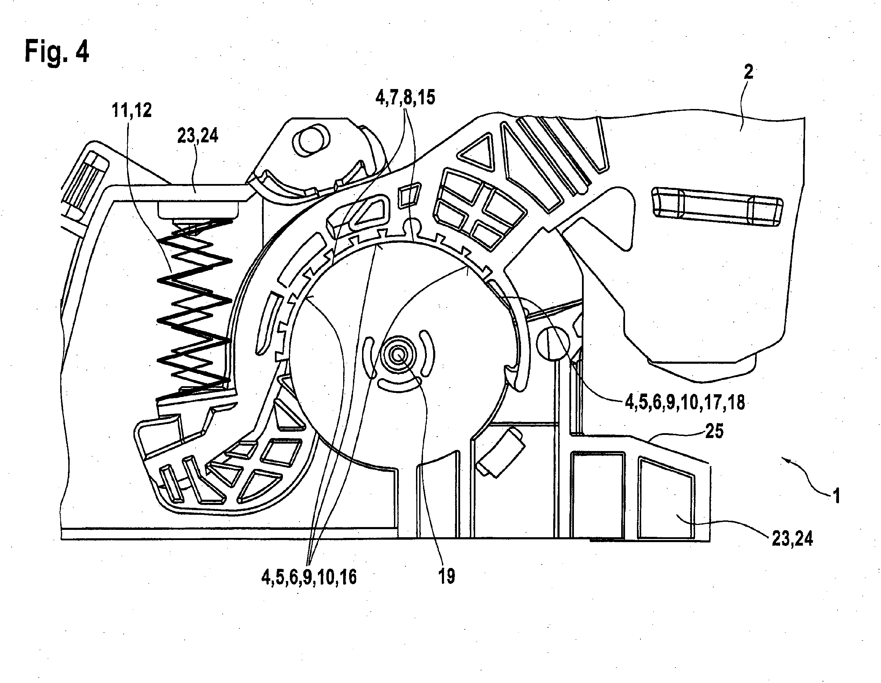

Die erste Reibfläche 6 ist in den ersten Abschnitt 16 und in den zweiten Abschnitt 17 unterteilt. Dabei umfasst ein Großteil der ersten Reibfläche 6 den ersten Abschnitt 16, sodass ca. 90% der tangentialen Ausdehnung der ersten Reibfläche 9 den ersten Abschnitt 16 bildet und ca. 10% der tangentialen Ausdehnung der ersten Reibfläche 6 den zweiten Abschnitt 17 der ersten Reibfläche 6 bildet. In einem ersten Drehwinkelbereich 16 des Fahrpedals 2 weist die zweite Reibfläche 8 nur Kontakt zu dem ersten Abschnitt 16 der ersten Reibfläche 6 auf und keinen Kontakt zu dem zweiten Abschnitt 17, das heißt der Rampe 18 der ersten Reibfläche 6. Im zweiten Drehwinkelbereich 27 des Fahrpedals 2 und des zweiten Reibelements 7 weist die zweite Reibfläche 8 sowohl Kontakt zu dem ersten Abschnitt 16 als auch zu dem zweiten Abschnitt 17 der ersten Reibfläche 6 auf. In Fig. 4 ist ein Drehwinkel des Fahrpedals 2 im Endbereich des ersten Drehwinkelbereiches 26 dargestellt, das heißt, dass die zweite Reibfläche 8, die von dem Reibteil 15 gebildet ist, befindet sich kurz vor dem zweiten Abschnitt 17. In der in Fig. 5 dargestellten Endstellung des Fahrpedals 2 liegt die zweite Reibfläche 8 vollständig auf dem zweiten Abschnitt 17 der ersten Reibfläche 6 auf.

Bei einer Bewegung des Fahrpedals 2 von der Ausgangsstellung mit dem Drehwinkel Null zu einem Drehwinkel zwischen dem ersten und zweiten Drehwinkelbereich 26, 27 ist aufgrund der konzentrisch zueinander ausgerichteten zweiten Reibfläche 8 und dem ersten Abschnitt 16 der ersten Reibfläche 6 eine konstante Druckkraft zwischen dem ersten Abschnitt 16 der ersten Reibfläche 6 und der zweiten Reibfläche 8 vorhanden, sodass dadurch die erzeugbare Reibkraft direkt proportional zu der Kontaktfläche zwischen der ersten Reibfläche 6 und der zweiten Reibfläche 8 ist. Bei einer Bewegung des Fahrpedals 2 bzw. des zweiten Reibelements 7 von einem Drehwinkel zwischen dem ersten und zweiten Drehwinkelbereich 26, 27 zu der Endstellung des Fahrpedals 2, das heißt bei einer Bewegung des Fahrpedals 2 innerhalb des zweiten Drehwinkelbereichs 27 in Richtung zu der Endstellung des Fahrpedals 2, nimmt aufgrund der Geometrie der ebenen Rampe 18 die Druckkraft zwischen der zweiten Reibfläche 8 und dem zweiten Abschnitt 17 zu und es kommt zu einer elastischen Verformung des Reibteils 15 aus Santoprene, sodass dadurch an dem zweiten Abschnitt 17 eine größere Druckkraft vorhanden ist als an dem ersten Abschnitt 16. Dabei nimmt diese Druckkraft in tangentialer Richtung in Richtung zu dem tangentialen Ende der ebenen Rampe 18 zu. Dies führt zu einem überproportionalen Anstieg der Reibkraft bei einer Bewegung des Fahrpedals 2 in Richtung zu der Endstellung innerhalb des zweiten Drehwinkelbereichs 27.

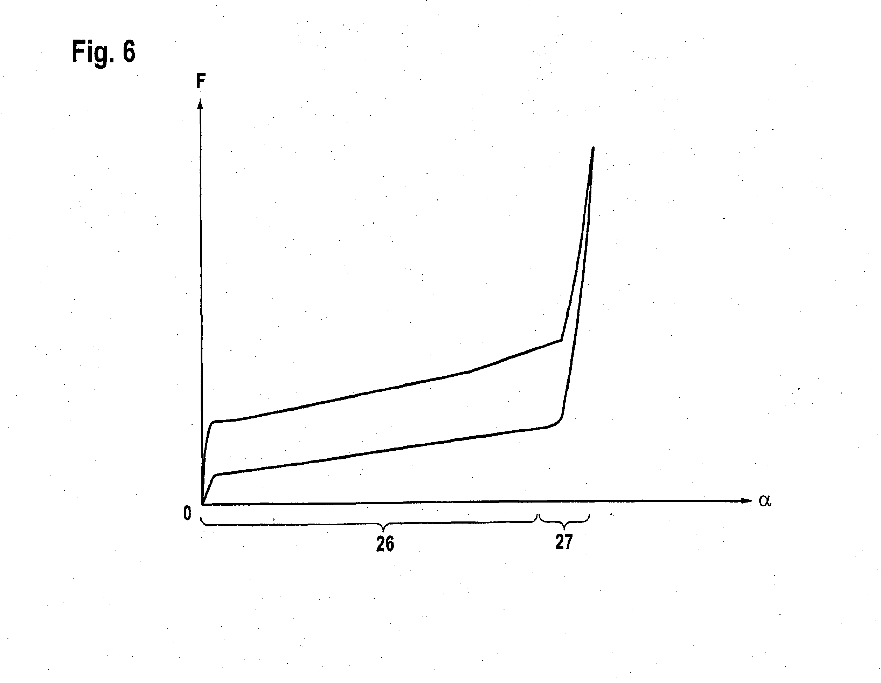

In Fig. 6 ist eine Reibhysterese bei Pedalwertgeberanordnung 1 dargestellt. An der Abszisse ist der Drehwinkel des Fahrpedals 2 aufgetragen und an der Ordinate die von der Einrichtung 4 erzeugte Reibkraft. Innerhalb des ersten Drehwinkelbereichs 26 nimmt die Reibkraft im Wesentlichen proportional zu dem Drehwinkel des Fahrpedals 2 zu. Mit Beginn des zweiten Drehwinkelbereichs 27, das heißt dem Beginn eines Kontaktes der zweiten Reibfläche 8 mit dem zweiten Abschnitt 17 der ersten Reibfläche 6, kommt es zu einem überproportionalen Anstieg der Reibkraft, die von der Einrichtung 4 erzeugt wird. Dies liegt an der erhöhten Druckkraft an dem zweiten Abschnitt 17 zwischen dem zweiten Abschnitt 17 und der zweiten Reibfläche 8. Bei einer Bewegung des Fahrpedals 2 von der Endstellung in die Ausgangsstellung, die von der Feder 12 ausgeführt wird, und nicht von einer von den Fahrer auf das Fahrpedal 2 aufgebrachten Druckkraft, wie bei einer Bewegung von der Ausgangsstellung in die Endstellung, ist die erzeugte Reibkraft geringer als bei einer Bewegung von der Ausgangsstellung in die Endstellung. Das oben Beschriebene, bezüglich der Bewegung von der Ausgangsstellung in die Endstellung des Fahrpedals 2 gilt dabei analog auch für eine Bewegung des Fahrpedals 2 von der Endstellung in die Ausgangsstellung.

Insgesamt betrachtet sind mit der erfindungsgemäßen Pedalwertgeberanordnung 1 wesentliche Vorteile verbunden. Aufgrund der Ausbildung des ersten Reibelementes 5 mit der ersten Reibfläche 6 mit dem ersten und zweiten Abschnitt 16, 17 ist es möglich, in einem ersten Drehwinkelbereich 26 einen proportionalen Anstieg der Reibkraft in Abhängigkeit von dem Drehwinkel des Fahrpedals 2 oder eine konstante Reibkraft zur Verfügung zu stellen und in dem zweiten Drehwinkelbereich 27 einen überproportionalen Anstieg der Reibkraft zur Verfügung zu stellen. Überproportional bedeutet dabei insbesondere, dass die Reibkraft an dem zweiten Drehwinkelbereich 27 stärker ansteigt, insbesondere in Abhängigkeit von dem Drehwinkel, als an dem ersten Drehwinkelbereich 26 und/oder die Reibkraft an dem zweiten Drehwinkelbereich 27 größer ist als an dem ersten Drehwinkelbereich 26. Je größer die tangentiale Ausdehnung des zweiten Abschnittes 17 ist, desto größer ist der zweite Drehwinkelbereich 27 und umgekehrt. Beim Spritzgießen der Haltestruktur 24 kann somit durch eine einfache Ausbildung des Spritzgusswerkzeugs mit einer entsprechenden Form der zweite Abschnitt 17 kostengünstig zur Verfügung gestellt werden und mit Hilfe eines unterschiedlich großen zweiten Abschnittes 17 können auch unterschiedlich große zweite Drehwinkelbereiche 17 einfach und kostengünstig zur Verfügung gestellt werden. Dabei kann in dem zweiten Drehwinkelbereich 27 der Grad bzw. die Größe des überproportionalen Anstiegs der Reibkraft bezüglich dem ersten Drehwinkelbereich 26 auch einfach dahingehend geändert werden, indem unterschiedliche Geometrien des zweiten Abschnittes 17 zur Verfügung gestellt werden. Je stärker die Zunahme des Abstandes des zweiten Abschnittes 17 zu der Schwenkachse 19 ist, desto größer ist die Druckkraft zwischen der zweiten Reibfläche 8 und dem zweiten Abschnitt 17 und desto größer ist die pro Flächeneinheit an dem zweiten Abschnitt 17 erzeugte Reibkraft und umgekehrt. Dadurch können in einfacher Weise mit der Pedalwertgeberanordnung 1 Reibhysteresen zur Verfügung gestellt werden, die zwei unterschiedliche Abschnitte der Zunahme der Reibkraft aufweisen.

## Patentansprüche

1. Pedalwertgeberanordnung (1) für ein Kraftfahrzeug (22), umfassend ein zwischen einer Ausgangsstellung und einer Endstellung verschwenkbares Fahrpedal (2),
ein Lager (9) für das Fahrpedal (2),
wenigstens ein elastisches Element (11), insbesondere Feder (12), welche auf das Fahrpedal (2) eine Rückstellkraft in Richtung der Ausgangsstellung aufbringt, um das Fahrpedal (2) in die Ausgangsstellung zu bewegen,
eine Einrichtung (4) zur Erzeugung einer Reibhysterese an dem Fahrpedal (2), die Einrichtung (4) umfassend ein erstes Reibelement (5) mit einer, vorzugsweise im Querschnitt kreissegmentförmigen, ersten Reibfläche (6) und ein zweites, bewegliches mit dem Fahrpedal (2) in mechanischer Wirkverbindung stehendes Reibelement (7) mit einer im Querschnitt kreissegmentförmigen zweiten Reibfläche (8), wobei die erste und zweite Reibfläche (6, 8) aufeinander liegen, so dass aufgrund einer Relativbewegung zwischen
der ersten und zweiten Reibfläche (6, 8) eine Reibkraft erzeugbar ist,
**dadurch gekennzeichnet, dass**
die erste Reibfläche (6) einen zunehmenden Abstand zu einer Schwenkachse (19) des zweiten Reibelementes (7), insbesondere bezüglich einer Drehrichtung des zweiten Reibelementes (7) in Richtung zu der Endstellung, aufweist, so dass die erzeugbare Reibkraft pro Flächeneinheit der ersten Reibfläche (6) umso größer ist, je größer der Abstand der ersten Reibfläche (6) zu der Schwenkachse (19) des zweiten Reibelementes (7) ist.

2. Pedalwertgeberanordnung nach Anspruch 1,
**dadurch gekennzeichnet, dass**
die erste Reibfläche (6) einen ersten Abschnitt (16) aufweist und der erste Abschnitt (16) im Querschnitt kreissegmentförmig ausgebildet ist und einen konstanten Abstand zu der Schwenkachse (19) des zweiten Reibelementes (7) aufweist und einen zweiten Abschnitt (17) aufweist und der zweite Abschnitt (17) einen zunehmenden Abstand zu der Schwenkachse (19) des zweiten Reibelementes (7) aufweist
und/oder
der erste Abschnitt (16) der ersten Reibfläche (6) und die zweite Reibfläche (8) konzentrisch zueinander ausgerichtet sind
und/oder
ein maximaler Abstand der ersten Reibfläche (6) zu der Schenkachse (19) des zweiten Reibelementes (7) um wenigstens 0,1%, 1%, 3%, 5% oder 10% größer ist als der minimale Abstand der ersten Reibfläche (6) zu der Schwenkachse (19) des zweiten Reibelementes (7)
und/oder
das Fahrpedal (2) um eine Schwenkachse (19) verschenkbar ist und die Schwenkachse (19) des Fahrpedales (2) der Schwenkachse (19) des zweiten Reibelementes (7) entspricht.

3. Pedalwertgeberanordnung nach Anspruch 2,
**dadurch gekennzeichnet, dass**
in einem ersten Drehwinkelbereich des zweiten Reibelementes (7) die zweite Reibfläche (8) nur in Kontakt mit dem ersten Abschnitt (16) der ersten Reibfläche (6) steht, so dass bei einer Bewegung des Fahrpedales (2) von der Ausgangsstellung in die Endstellung die Reibkraft proportional zu der Kontaktfläche zwischen der ersten und zweiten Reibfläche (6, 8) zunimmt oder die Reibkraft bei einer konstanten Kontaktfläche konstant ist.

4. Pedalwertgeberanordnung nach Anspruch 2 oder 3,
**dadurch gekennzeichnet, dass**
in einem zweiten Drehwinkelbereich (27) des zweiten Reibelementes (7) die zweite Reibfläche (8) in Kontakt zu dem zweiten Abschnitt (17) und vorzugsweise zu dem ersten Abschnitt (16) der ersten Reibfläche (6) steht, so dass bei einer Bewegung des Fahrpedales (2) von der Ausgangsstellung in die Endstellung die Reibkraft überproportional zu der Kontaktfläche zwischen der ersten und zweiten Reibfläche (6, 8) zunimmt und vorzugsweise der zweite Drehwinkelbereich (27) die Endstellung des Fahrpedales (2) umfasst und vorzugsweise der erste Drehwinkelbereich (26) die Ausgangsstellung des Fahrpedales (2) umfasst.

5. Pedalwertgeberanordnung nach Anspruch 3 oder 4,
**dadurch gekennzeichnet, dass**
in der Ausgangsstellung des Fahrpedales (2) das Fahrpedal (2) den Drehwinkel Null aufweist und in der Endstellung des Fahrpedales (2) das Fahrpedal (2) den maximalen Drehwinkel aufweist und in dem ersten Drehwinkelbereich (26) der Drehwinkel des Fahrpedales (2) kleiner ist als in dem zweiten Drehwinkelbereich (27) und/oder
der Drehwinkel des Fahrpedales (2) zwischen zwei Begrenzungswinkeln des zweiten Drehwinkelbereiches (27) weniger als 90%, 70%, 50%, 30%, 20%, 10% oder 5% des maximalen Drehwinkels beträgt.

6. Pedalwertgeberanordnung nach einem oder mehreren der vorhergehenden Ansprüche,
**dadurch gekennzeichnet, dass**
die erste Reibfläche (6) mit dem zunehmenden Abstand zu der Schwenkachse (19) des zweiten Reibelementes (7), insbesondere an dem zweiten Abschnitt (17) der ersten Reibfläche (6), einen stetig zunehmenden Abstand zu einer Schwenkachse (19) des zweiten Reibelementes (7) aufweist.

7. Pedalwertgeberanordnung nach einem oder mehreren der vorhergehenden Ansprüche,
**dadurch gekennzeichnet, dass**
die erste Reibfläche (6) mit dem zunehmenden Abstand zu der Schwenkachse (19) des zweiten Reibelementes (7), insbesondere an dem zweiten Abschnitt (17) der ersten Reibfläche (6), als eine ebene Rampe (18) ausgebildet ist.

8. Pedalwertgeberanordnung nach einem oder mehreren der Ansprüche 1 bis 5 und 7,
**dadurch gekennzeichnet, dass**
die erste Reibfläche (6) mit dem zunehmenden Abstand zu der Schwenkachse (19) des zweiten Reibelementes (7), insbesondere an dem zweiten Abschnitt (17) der ersten Reibfläche (6), als eine konvexe oder konkave Fläche ausgebildet ist.

9. Pedalwertgeberanordnung nach einem oder mehreren der vorhergehenden Ansprüche,
**dadurch gekennzeichnet, dass**
die erste und zweite Reibfläche (6, 8) das Lager (9) des Fahrpedales (2) bilden.

10. Pedalwertgeberanordnung nach einem oder mehreren der vorhergehenden Ansprüche,
**dadurch gekennzeichnet, dass**
die Pedalwertgeberanordnung (1) eine Haltestruktur (24), insbesondere einen Lagerbock (23), umfasst und das erste Reibelement (5), insbesondere einteilig, an der Haltestruktur (24) ausgebildet ist.

11. Pedalwertgeberanordnung nach Anspruch 10,
**dadurch gekennzeichnet, dass**
die Haltestruktur (24) und/oder das erste Reibelement (5) wenigstens teilweise, insbesondere vollständig, aus, vorzugsweise thermoplastischen, Kunststoff bestehen.

12. Pedalwertgeberanordnung nach einem oder mehreren der vorhergehenden Ansprüche,
**dadurch gekennzeichnet, dass**
das zweite Reibelement (7), insbesondere einteilig mit dem Fahrpedal (2) oder als gesonderte Reibteil (15), an dem Fahrpedal (2) ausgebildet ist.

13. Pedalwertgeberanordnung nach einem oder mehreren der vorhergehenden Ansprüche,
**dadurch gekennzeichnet, dass**
das Fahrpedal (2) und/oder das zweite Reibelement (7) wenigstens teilweise, insbesondere vollständig, aus, vorzugsweise thermoplastischen, Kunststoff bestehen.

14. Pedalwertgeberanordnung nach einem oder mehreren der vorhergehenden Ansprüche,
**dadurch gekennzeichnet, dass**
das erste Reibelement (5), insbesondere das erste Reibelement (5) an dem zweiten Abschnitt (17), und/oder das zweite Reibelement (7) wenigstens teilweise, insbesondere vollständig, aus einem thermoplastischen Elastomer oder Kunststoff, z. B. Santoprene, bestehen.

15. Pedalwertgeberanordnung nach einem oder mehreren der vorhergehenden Ansprüche,
**dadurch gekennzeichnet, dass**
die Pedalwertgeberanordnung (1) einen Sensor (20) zur Erfassung einer Stellung des Fahrpedales (2) und/oder eine Motoreinheit (13), von welcher auf das Fahrpedal (2) eine Rückstellkraft in Richtung der Ausgangsstellung aufbringbar ist, umfasst.

## Claims

1. Pedal value encoder arrangement (1) for a motor vehicle (22) comprising an accelerator pedal (2) which can be pivoted between an initial position and an end position,
a bearing (9) for the accelerator pedal (2),
at least one elastic element (11), in particular a spring (12) which applies a restoring force in the direction of the initial position to the accelerator pedal (2), in order to move the accelerator pedal (2) into the initial position,
a device (4) for generating a friction hysteresis at the accelerator pedal (2), the device (4) comprising a first friction element (5) with a first friction face (6), preferably in the form of a circular segment in cross section and a second, movable friction element (7) which has a mechanical operative connection to the accelerator pedal (2) with a second friction face (8) which is in the form of a circular segment in cross section, wherein the first and second friction faces (6, 8) rest one on the other, with the result that a frictional force can be generated on the basis of a relative movement between the first and second friction faces (6, 8),
**characterized in that**
the first friction face (6) has an increasing distance from a pivoting axis (19) of the second friction element (7), in particular with respect to a rotational direction of the second friction element (7) in the direction of the end position, with the result that the frictional force which can be generated per unit area of the first friction face (6) is larger, the larger the distance between the first friction face (6) and the pivoting axis (19) of the second friction element (7).

2. Pedal value encoder arrangement according to Claim 1,
**characterized in that**
the first friction face (6) has a first section (16), and the first section (16) is embodied in a circular segment in cross section and has a constant distance from the pivoting axis (19) of the second friction element (7), and has a second section (17), and the second section (17) has an increasing distance from the pivoting axis (19) of the second friction element (7), and/or
the first section (16) of the first friction face (6) and the second friction face (8) are oriented concentrically with respect to one another,
and/or
a maximum distance of the first friction face (6) from the pivoting axis (19) of the second friction element (7) is at least 0.1%, 1%, 3%, 5% or 10% larger than the minimum distance of the first friction face (6) from the pivoting axis (19) of the second friction element (7),
and/or
the accelerator pedal (2) can be pivoted about a pivoting axis (19), and the pivoting axis (19) of the accelerator pedal (2) corresponds to the pivoting axis (19) of the second friction element (7).

3. Pedal value encoder arrangement according to Claim 2,
**characterized in that**
in a first rotational angle range of the second friction element (7) the second friction face (8) is in contact only with the first section (16) of the first friction face (6) with the result that in the event of a movement of the accelerator pedal (2) from the initial position into the end position the frictional force increases in proportion to the contact area between the first and second friction faces (6, 8), or the frictional force is constant given a constant contact area.

4. Pedal value encoder arrangement according to Claim 2 or 3,
**characterized in that**
in a second rotational angle range (27) of the second friction element (7) the second friction face (8) is in contact with the second section (17) and preferably with the first section (16) of the first friction face (6), with the result that in the event of a movement of the accelerator pedal (2) from the initial position into the end position the frictional force increases disproportionally with respect to the contact area between the first and second friction faces (6, 8), and the second rotational angle range (27) preferably comprises the end position of the accelerator pedal (2), and the first rotational angle range (26) preferably comprises the initial position of the accelerator pedal (2).

5. Pedal value encoder arrangement according to Claim 3 or 4,
**characterized in that**
in the initial position of the accelerator pedal (2) the accelerator pedal (2) has the rotational angle zero, and in the end position of the accelerator pedal (2) the accelerator pedal (2) has the maximum rotational angle, and in the first rotational angle range (26) the rotational angle of the accelerator pedal (2) is smaller than in the second rotational angle range (27),
and/or
the rotational angle of the accelerator pedal (2) between two limiting angles of the second rotational angle range (27) is less than 90%, 70%, 50%, 30%, 20%, 10% or 5% of the maximum rotational angle.

6. Pedal value encoder arrangement according to one or more of the preceding claims,
**characterized in that**
as the distance from the pivoting axis (19) of the second friction element (7), in particular on the second section (17) of the first friction face (6) increases, the first friction face (6) has a continually increasing distance from a pivoting axis (19) of the second friction element (7).

7. Pedal value encoder arrangement according to one or more of the preceding claims,
**characterized in that**
as the distance from the pivoting axis (19) of the second friction element (7), in particular on the second section (17) of the first friction face (6), increases, the first friction face (6) is embodied as a level ramp (18).

8. Pedal value encoder arrangement according to one or more of Claims 1 to 5 and 7,
**characterized in that**
as the distance from the pivoting axis (19) of the second friction element (7) increases, in particular on the second section (17) of the first friction face (6), the first friction face (6) is embodied as a convex or concave face.

9. Pedal value encoder arrangement according to one or more of the preceding claims,
**characterized in that**
the first and second friction faces (6, 8) form the bearing (9) of the accelerator pedal (2).

10. Pedal value encoder arrangement according to one or more of the preceding claims,
**characterized in that**
the pedal value encoder arrangement (1) comprises a securing structure (24), in particular a bearing block (23), and the first friction element (5) is embodied, in particular in one piece, on the securing structure (24).

11. Pedal value encoder arrangement according to Claim 10,
**characterized in that**
the securing structure (24) and/or the first friction element (5) are composed at least partially, in particular completely, of plastic, preferably thermoplastic.

12. Pedal value encoder arrangement according to one or more of the preceding claims,
**characterized in that**
the second friction element (7) is embodied, in particular in one piece with the accelerator pedal (2) or as a separate friction part (15), on the accelerator pedal (2).

13. Pedal value encoder arrangement according to one or more of the preceding claims,
**characterized in that**
the accelerator pedal (2) and/or the second friction element (7) are composed at least partially, in particular completely, of plastic, preferably thermoplastic.

14. Pedal value encoder arrangement according to one or more of the preceding claims,
**characterized in that**
the first friction element (5), in particular the first friction element (5) on the second section (17), and/or the second friction element (7) are composed at least partially, in particular completely, of thermoplastic elastomer or plastic, for example Santoprene.

15. Pedal value encoder arrangement according to one or more of the preceding claims,
**characterized in that**
the pedal value encoder arrangement (1) comprises a sensor (20) for sensing a position of the accelerator pedal (2) and/or a motor unit (13), by which a restoring force can be applied to the accelerator pedal (2) in the direction of the initial position.

## Revendications

1. Ensemble capteur de pédale (1) pour un véhicule automobile (22), comprenant
une pédale d'accélérateur (2) pouvant pivoter entre une position de départ et une position finale,
un palier (9) pour la pédale d'accélérateur (2),
au moins un élément élastique (11), en particulier un ressort (12), lequel applique sur la pédale d'accélérateur (2) une force de rappel en direction de la position de départ, afin de déplacer la pédale d'accélérateur (2) jusqu'à la position de départ,
un dispositif (4) pour produire une hystérésis de friction sur la pédale d'accélérateur (2), le dispositif (4) comportant un premier élément de friction (5) présentant une première surface de friction (6) de préférence en forme de segment de cercle en section transversale et un deuxième élément de friction (7) mobile, en liaison fonctionnelle mécanique avec la pédale d'accélérateur (2), présentant une deuxième surface de friction (8) en forme de segment de cercle en section transversale, la première et la deuxième surface de friction (6, 8) étant superposées, de telle sorte qu'une force de friction puisse être produite en raison d'un déplacement relatif entre la première et la deuxième surface de friction (6, 8),
**caractérisé en ce que**
la première surface de friction (6) est située à une distance croissante d'un axe de pivotement (19) du deuxième élément de friction (7), en particulier par rapport à un sens de rotation du deuxième élément de friction (7) en direction de la position finale, de telle sorte que la force de friction pouvant être produite par unité de surface de la première surface de friction (6) soit d'autant plus grande que la distance de la première surface de friction (6) à l'axe de pivotement (19) du deuxième élément de friction (7) est grande.

2. Ensemble capteur de pédale selon la revendication 1,
**caractérisé en ce que**
la première surface de friction (6) comprend une première portion (16) et la première portion (16) est réalisée en forme de segment de cercle en section transversale et est située à une distance constante de l'axe de pivotement (19) du deuxième élément de friction (7) et comprend une deuxième portion (17) et la deuxième portion (17) est située à une distance croissante de l'axe de pivotement (19) du deuxième élément de friction (7)
et/ou
la première portion (16) de la première surface de friction (6) et la deuxième surface de friction (8) sont orientées concentriquement l'une par rapport à l'autre
et/ou
une distance maximale de la première surface de friction (6) à l'axe de pivotement (19) du deuxième élément de friction (7) est d'au moins 0,1 %, 1 %, 3 %, 5 % ou 10 % supérieure à la distance minimale de la première surface de friction (6) à l'axe de pivotement (19) du deuxième élément de friction (7)
et/ou
la pédale d'accélérateur (2) est pivotante autour d'un axe de pivotement (19) et l'axe de pivotement (19) de la pédale d'accélérateur (2) correspond à l'axe de pivotement (19) du deuxième élément de friction (7).

3. Ensemble capteur de pédale selon la revendication 2,
**caractérisé en ce que**,
dans une première plage d'angles de rotation du deuxième élément de friction (7), la deuxième surface de friction (8) n'est en contact qu'avec la première portion (16) de la première surface de friction (6), de telle sorte qu'en cas de déplacement de la pédale d'accélérateur (2) de la position de départ à la position finale, la force de friction augmente proportionnellement à la surface de contact entre la première et la deuxième surface de friction (6, 8) ou la force de friction est constante en cas de surface de contact constante.

4. Ensemble capteur de pédale selon la revendication 2 ou 3,
**caractérisé en ce que**,
dans une deuxième plage d'angles de rotation (27) du deuxième élément de friction (7), la deuxième surface de friction (8) est en contact avec la deuxième portion (17) et de préférence avec la première portion (16) de la première surface de friction (6), de telle sorte qu'en cas de déplacement de la pédale d'accélérateur (2) de la position de départ à la position finale, la force de friction augmente plus que proportionnellement à la surface de contact entre la première et la deuxième surface de friction (6, 8) et de préférence la deuxième plage d'angles de rotation (27) comporte la position finale de la pédale d'accélérateur (2) et de préférence la première plage d'angles de rotation (26) comporte la position de départ de la pédale d'accélérateur (2).

5. Ensemble capteur de pédale selon la revendication 3 ou 4,
**caractérisé en ce que**,
dans la position de départ de la pédale d'accélérateur (2), la pédale d'accélérateur (2) présente l'angle de rotation nul et, dans la position finale de la pédale d'accélérateur (2), la pédale d'accélérateur (2) présente l'angle de rotation maximal et, dans la première plage d'angles de rotation (26), l'angle de rotation de la pédale d'accélérateur (2) est inférieur à l'angle de rotation dans la deuxième plage d'angles de rotation (27)
et/ou
l'angle de rotation de la pédale d'accélérateur (2) vaut, entre deux angles de limitation de la deuxième plage d'angles de rotation (27), moins de 90 %, 70 %, 50 %, 30 %, 20 %, 10 % ou 5 % de l'angle de rotation maximal.

6. Ensemble capteur de pédale selon l'une quelconque ou plusieurs des revendications précédentes,
**caractérisé en ce que**
la première surface de friction (6) présentant la distance croissante à l'axe de pivotement (19) du deuxième élément de friction (7), en particulier sur la deuxième portion (17) de la première surface de friction (6), présente une distance constamment croissante à un axe de pivotement (19) du deuxième élément de friction (7).

7. Ensemble capteur de pédale selon l'une quelconque ou plusieurs des revendications précédentes,
**caractérisé en ce que**
la première surface de friction (6) présentant la distance croissante à l'axe de pivotement (19) du deuxième élément de friction (7), en particulier sur la deuxième portion (17) de la première surface de friction (6), est réalisée sous forme de rampe plane (18).

8. Ensemble capteur de pédale selon l'une quelconque ou plusieurs des revendications 1 à 5 et 7,
**caractérisé en ce que**
la première surface de friction (6) présentant la distance croissante à l'axe de pivotement (19) du deuxième élément de friction (7), en particulier sur la deuxième portion (17) de la première surface de friction (6), est réalisée sous la forme d'une surface convexe ou concave.

9. Ensemble capteur de pédale selon l'une quelconque ou plusieurs des revendications précédentes,
**caractérisé en ce que**
la première et la deuxième surface de friction (6, 8) forment le palier (9) de la pédale d'accélérateur (2).

10. Ensemble capteur de pédale selon l'une quelconque ou plusieurs des revendications précédentes,
**caractérisé en ce que**
l'ensemble capteur de pédale (1) comporte une structure de retenue (24), en particulier un support de palier (23), et le premier élément de friction (5) est réalisé, en particulier d'un seul tenant, sur la structure de retenue (24).

11. Ensemble capteur de pédale selon la revendication 10,
**caractérisé en ce que**
la structure de retenue (24) et/ou le premier élément de friction (5) sont constitués au moins partiellement, en particulier complètement, de plastique de préférence thermoplastique.

12. Ensemble capteur de pédale selon l'une quelconque ou plusieurs des revendications précédentes,
**caractérisé en ce que**
le deuxième élément de friction (7) est réalisé, en particulier d'un seul tenant avec la pédale d'accélérateur (2) ou sous forme de partie de friction séparée (15), sur la pédale d'accélérateur (2).

13. Ensemble capteur de pédale selon l'une quelconque ou plusieurs des revendications précédentes,
**caractérisé en ce que**
la pédale d'accélérateur (2) et/ou le deuxième élément de friction (7) sont constitués au moins partiellement, en particulier complètement, de plastique de préférence thermoplastique.

14. Ensemble capteur de pédale selon l'une quelconque ou plusieurs des revendications précédentes,
**caractérisé en ce que**
le premier élément de friction (5), en particulier le premier élément de friction (5) sur la deuxième portion (17), et/ou le deuxième élément de friction (7) sont constitués au moins partiellement, en particulier complètement, d'un élastomère ou d'un plastique thermoplastique, par exemple de Santoprene.

15. Ensemble capteur de pédale selon l'une quelconque ou plusieurs des revendications précédentes,
**caractérisé en ce que**
l'ensemble capteur de pédale (1) comporte un capteur (20) pour détecter une position de la pédale d'accélérateur (2) et/ou une unité de moteur (13) au moyen de laquelle une force de rappel en direction de la position de départ peut être appliquée sur la pédale d'accélérateur (2).
